# FASCICULE DE BREVET EUROPEEN

(11) **EP 2 056 490 B1**
(45) Date de publication et mention de la délivrance du brevet: **14.12.2011**
(21) Numéro de dépôt: 08290991.2
(22) Date de dépôt: 22.10.2008
(51) Int. Cl.: H04B 7/26

(54) **Système de commande synchronisée de composants électriques d'une pluralité d'équipements**
Synchronisiertes Steuersystem für elektrische Komponenten in mehreren Geräten
System for synchronised control of the electrical components of a plurality of devices

(30) Priorité: 30.10.2007 FR 0707630
(43) Date de publication de la demande: 06.05.2009
(73) Titulaire: Serco, F-75016 Paris (FR)
(72) Inventeur: Lapresle, Georges, 75007 Paris (FR)
(74) Mandataire: Remy, Vincent Noel Paul

(56) Documents cités:
- EP-A- 1 615 185
- FR-A- 2 890 177
- JP-A- 10 040 494

## Description

La présente invention concerne un système de commande de composants électriques embarqués sur une pluralité d'équipements.

L'invention trouve un champ d'application très large puisqu'elle peut être mise en oeuvre pour des composants électriques de toute sorte, en particulier des microprocesseurs dans le domaine des équipements informatiques, des moteurs de défilement de supports, affiches par exemple, dans le domaine des équipements d'affichage publicitaire, ou encore des sources lumineuses ou sonores.

Pour des raisons de clarté et de simplicité, le système de commande de composants électriques conforme à l'invention sera décrit et expliqué dans la suite en référence à la commande de sources lumineuses ou sonores, sans que cela n'implique un quelconque caractère limitatif quant aux composants électriques concernés par l'invention.

Dans ce contexte, l'invention a pour objet de permettre une harmonisation des effets d'ensemble produits par une pluralité d'équipements, fixes ou mobiles, disposant de sources lumineuses ou sonores fonctionnant de manière indépendante les unes par rapport aux autres.

Plus précisément, si l'on considère un exemple où les équipements concernés peuvent émettre des signaux intermittents, généralement appelés feux clignotants, à partir de sources lumineuses telles que des phares, des diodes électroluminescentes LED, etc., il s'avère en général qu'en l'absence de toute disposition particulière, chaque source clignote sans aucune corrélation avec le clignotement des autres sources, donnant ainsi une impression d'incohérence visuelle à toute personne percevant les clignotements provenant de l'ensemble des équipements émetteurs. On peut citer dans cet ordre d'idée le clignotement erratique produit par les feux d'un ensemble de motocyclettes lors d'un défilé par exemple.

Cette situation est due au fait que les unités de gestion installées sur les équipements qui commandent les différentes sources sont autonomes et indépendantes les unes des autres.

Pour créer un effet d'ensemble harmonieux, il est nécessaire d'introduire entre les unités de gestion des divers équipements un élément de corrélation qui permette aux différentes sources d'émettre simultanément, de manière synchrone, et selon une même séquence temporelle de signaux.

Pour obtenir ce résultat, il serait possible de choisir parmi tous les équipements un équipement-maître qui définirait un signal de référence que tous les autres équipements devraient reproduire de manière synchrone

Cependant, cette solution présente l'inconvénient de ne pas être opérationnelle en cas de défaillance de l'équipement-maître.

On pourrait également penser à corréler les unités de gestion des différents équipements au moyen d'un signal de synchronisation circulant sur un lien physique, à fil notamment, reliant les unités de gestion entre elles.

Cependant, cette autre solution n'est pas utilisable dans le cas où les équipements sont mobiles et évoluent de manière indépendante les uns par rapport aux autres.

Aussi, le problème technique à résoudre par l'objet de la présente invention est de proposer un système de commande de composants électriques embarqués sur une pluralité d'équipements comportant, chacun, une unité de gestion d'au moins un composant électrique, les unités de gestion de la pluralité d'équipements étant autonomes et indépendantes, qui permettrait de réaliser une commande synchronisée des composants électriques qui soit simple, fiable et applicable aussi bien aux équipements fixes que mobiles.

La solution au problème technique posé consiste, selon la présente invention, en ce que, lesdits équipements étant situés dans une zone de réception d'un signal d'horloge de référence d'un système de géolocalisation,, l'unité de gestion d'un équipement comprend :
- une unité de réception apte à extraire ledit signal d'horloge de référence du signal du système de géolocalisation,
- une unité de traitement du signal d'horloge reçu par ladite unité de réception, ladite unité de traitement étant apte à fournir un signal de signal de synchronisation à partir du signal d'horloge de référence,
- une unité de commande apte à commander ledit composant électrique à partir dudit signal de synchronisation fourni par l'unité de traitement.

Ainsi, toutes les unités de gestion de l'ensemble des équipements utilisent simultanément un même et unique signal de référence pour la commande des composants. Le nombre d'équipements peut être quelconque et illimité, l'essentiel étant que tous les équipements soient situés à l'intérieur de ladite zone de réception du signal d'horloge de référence.

Les séquences lumineuses ou sonores produisent alors un effet visuel ou auditif harmonieux qui renforce l'attractivité de l'événement produit par l'ensemble des équipements. Dans le cas d'un défilé de motocyclistes par exemple, on comprend qu'un clignotement parfaitement synchronisé des feux de toutes les motocyclettes puisse donner au spectacle présenté une dimension émotionnelle supplémentaire.

Il convient de signaler ici que la demande de brevet français n° 2 890 177, la demande de brevet japonais n° 10 040494 et la demande de brevet européen n° 1 615 185 décrivent des systèmes comportant des composants équipés chacun d'une horloge interne. Un signal de géolocalisation, GPS par exemple est alors utilisé pour synchroniser l'ensemble des horlogers internes de manière à les caler sur une même référence temporelle. Il ne s'agit donc pas de systèmes dans lesquels, comme dans l'invention, le signal de géolocalisation est utilisé pour commander directement le fonctionnement de composants dépourvus d'horloges internes.

Avantageusement, l'invention prévoit que l'unité de traitement est apte à fournir un signal de synchronisation programmable en fonction d'au moins un des paramètres suivants : fréquence, rapport cyclique, intensité.

Il est alors possible de créer des séquences lumineuses ou visuelles personnalisées, à la demande, en faisant varier la fréquence du clignotement par exemple, et/ou la durée de clignotement, et/ou l'intensité de la source

La programmation du signal de synchronisation peut être réalisée individuellement sur chaque équipement, ou encore, comme prévu par l'invention, ledit signal de synchronisation est programmable à distance, au moyen par exemple d'un signal radio commun envoyé à l'ensemble des équipements concernés.

Selon un mode de réalisation de l'invention, ledit signal d'horloge de référence est le signal PPS du système de géolocalisation GPS.

La description qui va suivre en regard des dessins annexés, donnés à titre d'exemples non limitatifs, fera bien comprendre en quoi consiste l'invention et comment elle peut être réalisée.

La figure 1 est une vue d'ensemble d'un système conforme à l'invention.

La figure 2 est un schéma d'une unité de gestion des sources d'un équipement du système de la figure 1.

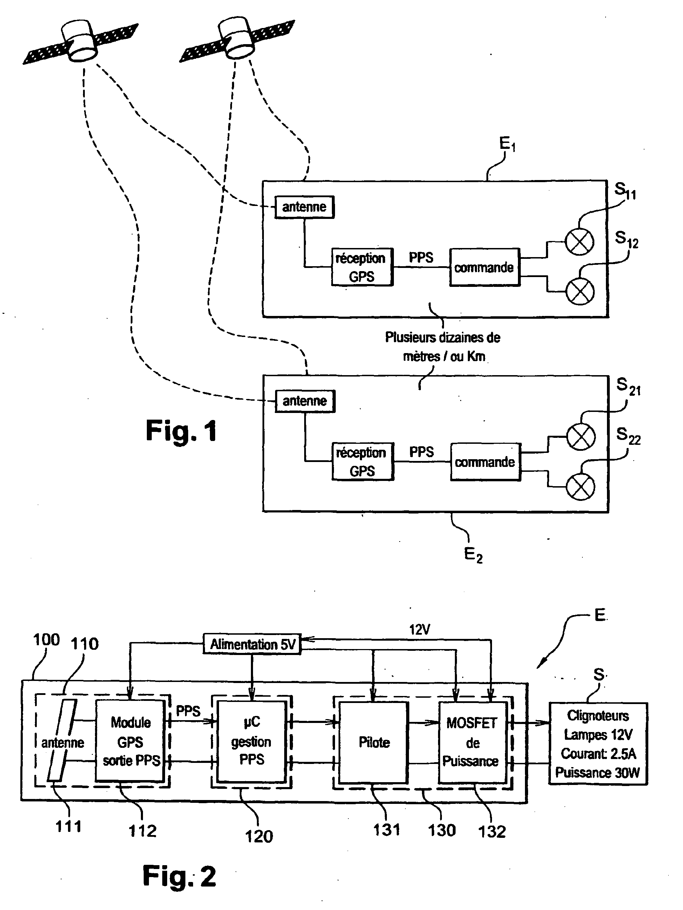

Sur la figure 1 est représenté une pluralité d'équipements, tels que les équipements référencés E₁ et E₂, sur lesquels sont embarquées des sources lumineuses ou sonores. Dans le mode de réalisation montré à la figure 1, chaque équipement E₁, E₂ porte deux sources S₁₁, S₁₂ pour E₁, et S_{21,} S₂₂ pour E₂. Ces sources sont par exemple des feux de clignotement à LED d'un équipement mobile, tel qu'une motocyclette. Bien entendu, les équipements E₁, E₂ pourraient tout aussi bien être fixes sans pour cela sortir du cadre de l'invention.

Notons que lesdits équipements E₁, E₂ pourraient tout aussi bien être des équipements informatiques embarquant de microprocesseurs, ou des équipements d'affichage publicitaire embarquant des moteurs de défilement de supports comme des affiches.

La distance entre deux équipements E₁, E₂ peut donc être fixe ou variable et prendre des valeurs s'étalant entre quelques dizaines de mètres et plusieurs kilomètres.

Les sources S₁₁, S₁₂ d'une part et S₁₂, S₂₂ d'autre part sont commandées de manière autonome et indépendante par des unités de gestion, qui seront décrites en détail plus loin, de sorte que les émissions lumineuses ou sonores qu'elles produisent sont sans aucune corrélation entre elles, ce qui peut être préjudiciable pour l'effet visuel ou sonore perçu par un spectateur lors d'un évènement auquel participe un grand nombre d'équipements, comme un défilé de motocyclettes comportant des feux de clignotement à LED. L'absence de corrélation entre les clignotements émis par les diodes LED des différentes motocyclettes peut être à l'origine d'une impression d'incohérence désagréable à l'oeil.

Un but de l'invention est donc d'obtenir un effet visuel ou sonore homogène entre les sources des divers équipements, ici E₁ et E₂.

Comme on peut le voir sur la figure 1, ce but est atteint en exploitant un signal d'horloge de référence d'un système de géolocalisation que tous les équipements peuvent recevoir, ceux-ci étant tous situés dans une zone de réception de ce signal. La commande des sources des différents équipements peut alors être synchronisée à partir du signal d'horloge de référence qui est unique et le même pour tous les équipements qui le reçoivent.

Dans l'exemple de la figure 1, le signal d'horloge de référence est celui connu sous le nom de PPS (« Pulse Per Second ») qui peut être extrait des signaux émis par le système de géolocalisation GPS (« Global Positioning System »).

La figure 2 est un schéma d'une unité de gestion de sources d'un équipement qui montre comment l'invention peut être mise en oeuvre de façon pratique dans le cadre d'une synchronisation pilotée par le signal PPS du système GPS.

L'unité 100 de gestion de la figure 2 est destinée à commander de façon synchrone une source S, ou un ensemble de sources, d'un équipement E donné.

Comme le montre la figure 2, l'unité 100 de gestion comprend, en entrée, une unité 110 de réception du signal d'horloge de référence PPS.

Le signal GPS reçu par une antenne 111 de l'unité 110 est traité par un module GPS 112 de manière à démoduler le signal GPS et en extraire le signal PPS servant de base à la synchronisation recherchée. En effet, ce signal PPS constitue pour le système de commande de sources conforme à l'invention un signal d'horloge de référence qui est le même pour tous les équipements concernés se trouvant dans une zone de réception du signal GPS, et qui, de ce fait, permet de synchroniser la commande des sources de l'ensemble des équipements. Le signal PPS est une base de temps fixe de fréquence de 1 Hz et de rapport cyclique de 50%.

Le signal PPS ainsi extrait du signal GPS par le module GPS 112 est appliqué à une unité 120 de traitement constitué essentiellement par un microcontrôleur chargé de fournir un signal de synchronisation à partir du signal d'horloge de référence PPS. Ce signal de synchronisation est construit de manière à présenter une fréquence et/ou un rapport cyclique et/ou une intensité ajustables par programmation, notamment à distance. On peut ainsi régler à la demande la fréquence de clignotement de sources lumineuses par exemple, ainsi que leur durée de clignotement ou leur intensité.

Le signal de synchronisation délivré par l'unité 120 de traitement est à son tour founi à une unité 130 de commande comprenant un circuit 131 de pilotage chargé de mettre en forme le signal de synchronisation avant qu'il soit appliqué à un interrupteur 132 de puissance. De manière connue, l'interrupteur 132 de puissance est réalisé au moyen de transistors MOSFET de puissance destinés à commander, au rythme de la synchronisation choisie, le courant fourni à la source S par une batterie de 12 V par exemple, servant à l'alimentation électrique de l'équipement E.

Dans le mode de réalisation qui vient d'être décrit, le courant fourni à la source S résulte de la mise en forme par le signal de synchronisation du courant continu délivré par la batterie de l'équipement.

## Revendications

1. Système de commande de composants électriques (S₁₁, S₁₂, S₂₁, S₂₂; S) embarqués sur une pluralité d'équipements (E₁, E₂ ; E) comportant, chacun, une unité de gestion (100) d'au moins un composant électrique, les unités de gestion de la pluralité d'équipements étant autonomes et indépendantes, lesdits équipements étant situés dans une zone de réception d'un signal (PPS) d'horloge de référence d'un système (GPS) de géolocalisation, **caractérisé en ce que** l'unité (100) de gestion d'un équipement comprend :
- une unité (110) de réception apte à extraire ledit signal (PPS) d'horloge de référence du signal du système (GPS) de géolocalisation,
- une unité (120) de traitement du signal (PPS) d'horloge reçu par ladite unité (110) de réception, ladite unité de traitement étant apte à fournir un signal de signal de synchronisation à partir du signal (PPS) d'horloge de référence,
- une unité (130) de commande comprenant un circuit (131) de pilotage chargé de mettre en forme le signal de synchronisation avant qu'il soit appliqué à un interrupteur (132) de puissance de l'unité (130) de commande.

2. Système selon la revendication 1, dans lequel l'unité (120) de traitement est apte à fournir un signal de synchronisation programmable en fonction d'au moins un des paramètres suivants : fréquence, rapport cyclique, intensité.

3. Système selon la revendication 2, dans lequel ledit signal de synchronisation est programmable à distance.

4. Système selon l'une des revendications 1 à 3, dans lequel ledit signal d'horloge de référence est le signal PPS du système de géolocalisation GPS.

5. Système selon l'une quelconque des revendications 1 à 4, dans lequel lesdits équipements sont fixes.

6. Système selon l'une quelconque des revendications 1 à 4, dans lequel lesdits équipements sont mobiles.

7. Système selon l'une quelconque des revendications 1 à 6, dans lequel ledit composant électrique est un microprocesseur d'un équipement informatique.

8. Système selon l'une quelconque des revendications 1 à 6, dans lequel ledit composant électrique est un moteur de défilement de supports d'un équipement d'affichage publicitaire.

9. Système selon l'une quelconque des revendications 1 à 6, dans lequel ledit composant électrique est une source lumineuse.

10. Système selon l'une quelconque des revendications 1 à 6, dans lequel ledit composant électrique est une source sonore.

## Claims

1. A system of controlling electrical components (S₁₁, S₁₂, S₂₁, S₂₂; S) on board a plurality of pieces of equipment (E₁, E₂; E), each including a management unit (100) for managing at least one electrical component, the management units of the plurality of the pieces of equipment being autonomous and independent, said pieces of equipment being situated in a reception zone for receiving a reference clock signal (PPS) of a global positioning system (GPS), the system being **characterized in that** the management unit (100) of a piece of equipment comprises:
· a receiver unit (110) suitable for extracting said reference clock signal (PPS) from the signal of the global positioning system (GPS);
· a processor unit (120) for processing the clock signal (PPS) received by said receiver unit (110), said processor unit being suitable for delivering a synchronization signal from the reference clock signal (PPS); and
· a control unit (130) including a driver circuit (131) for shaping the synchronization signal before it is applied to a power switch (132) of the control unit (130).

2. A system according to claim 1, wherein the processor unit (120) is suitable for delivering a synchronization signal that is programmable as a function of at least one of the following parameters: frequency; duty ratio; current.

3. A system according to claim 2, wherein said synchronization signal is remotely programmable.

4. A system according to any one of claims 1 to 3, wherein said reference clock signal is the PPS signal of the GPS global positioning system.

5. A system according to any one of claims 1 to 4, wherein said pieces of equipment are stationary.

6. A system according to any one of claims 1 to 6, wherein said pieces of equipment are mobile.

7. A system according to any one of claims 1 to 6, wherein said electrical component is a microprocessor of computer equipment.

8. A system according to any one of claims 1 to 6, wherein said electrical component is a motor for moving supports of advertising display equipment.

9. A system according to any one of claims 1 to 6, wherein said electrical component is a light source.

10. A system according to any one of claims 1 to 6, wherein said electrical component is a sound source.

## Patentansprüche

1. Steuerungssystem für elektrische Komponenten (S₁₁, S₁₂, S₂₁, S₂₂ ; S), die einer Mehrzahl von Geräten (E₁, E₂; E) eigen sind, die, jeweils, eine Einheit (100) zur Verwaltung zumindest einer elektrischen Komponente aufweisen, wobei die Verwaltungseinheiten der Mehrzahl von Geräten eigenständig und unabhängig sind, wobei sich die Geräte in einem Empfangsbereich für ein Referenztaktsignal (PPS) eines Geolokalisierungssystems (GPS) befinden, **dadurch gekennzeichnet, dass** die Verwaltungseinheit (100) eines Geräts umfasst:
- eine Empfangseinheit (110), die geeignet ist, um das Referenztaktsignal (PPS) aus dem Signal des Geolokalisierungssystems (GPS) zu extrahieren,
- eine Einheit (120) zur Verarbeitung des von der Empfangseinheit (110) empfangenen Taktsignals (PPS), wobei die Verarbeitungseinheit geeignet ist, um ein Synchronisationssignal auf Grundlage des Referenztaktsignals (PPS) zu liefern,
- eine Steuerungseinheit (130), die eine Ansteuerschaltung (131) mit der Aufgabe umfasst, das Synchronisationssignal zu formen, bevor es an einen Leistungsschalter (132) der Steuerungseinheit (130) gelegt wird.

2. System nach Anspruch 1, wobei die Verarbeitungseinheit (120) geeignet ist, um ein Synchronisationssignal zu liefern, das in Abhängigkeit von zumindest einem der folgenden Parameter programmierbar ist: Frequenz, Tastgrad, Intensität.

3. System nach Anspruch 2, wobei das Synchronisationssignal fernprogrammierbar ist.

4. System nach einem der Ansprüche 1 bis 3, wobei das Referenztaktsignal das PPS-Signal des Geolokalisierungssystems GPS ist.

5. System nach einem der Ansprüche 1 bis 4, wobei die Geräte ortsfest sind.

6. System nach einem der Ansprüche 1 bis 4, wobei die Geräte mobil sind.

7. System nach einem der Ansprüche 1 bis 6, wobei die elektrische Komponente ein Mikroprozessor eines Datenverarbeitungsgeräts ist.

8. System nach einem der Ansprüche 1 bis 6, wobei die elektrische Komponente ein Motor für den Durchlauf von Trägern eines Werbeanzeigegeräts ist.

9. System nach einem der Ansprüche 1 bis 6, wobei die elektrische Komponente eine Lichtquelle ist.

10. System nach einem der Ansprüche 1 bis 6, wobei die elektrische Komponente eine Schallquelle ist.
